# EUROPEAN PATENT SPECIFICATION

(11) **EP 1 487 652 B1**
(45) Date of publication and mention of the grant of the patent: **29.06.2005**
(21) Application number: 03716746.7
(22) Date of filing: 20.03.2003
(51) Int. Cl.: B60J 10/02, B60J 10/00, B29C 70/74

(54) **MOVABLE MODULAR WINDOW FOR A VEHICLE**
BEWEGLICHES MODULARES FAHRZEUGFENSTER
FENETRE MODULAIRE MOBILE DESTINEE A UN VEHICULE

(30) Priority: 26.03.2002 US 367677 P
(43) Date of publication of application: 22.12.2004
(73) Proprietor: Pilkington North America, Inc., Toledo, Ohio 43697 (US)
(72) Inventor: FRUTIG, Robert, R., Bowling Green, OH 43402 (US); ASH, Charles, E., Perrysburg, OH 43551 (US)
(74) Representative: Pfenning, Meinig & Partner GbR
(86) International application number: PCT/US2003/008665
(87) International publication number: WO 2003/082618

(56) References cited:
- EP-A- 0 561 743
- EP-A- 0 696 523
- DE-A- 3 245 710
- DE-A- 4 419 128
- US-A- 5 088 787
- US-B1- 6 293 609

## Description

### BACKGROUND

The present invention is directed to a vehicle window assembly according to the preamble of claim 1, for closing an opening in a vehicle body. A assembly of this type is disclosed in DE4419128A. More specifically, the present invention relates to a flexible seal which is a component of the modular window assembly.

Installation of transparent materials, especially glass, in viewing areas of vehicles, has been accomplished in many ways as vehicle designs have evolved to include larger and larger pieces of glass having high degrees of curvature, and the desire for an aerodynamic "flush-mounted" and/or "frameless" appearance. Additionally, vehicle designers also desire windows in vehicles such as mini-vans and sport utility vehicles to perform different functions than in the past.

At the same time, vehicle manufacturers constantly are looking for ways to streamline the vehicle assembly process, and to obtain all these benefits at a reduced cost.

### SUMMARY OF THE INVENTION

The present invention achieves the above-desired objectives by combining advanced thermoplastic elastomer and advanced adhesive technology to create an aesthetically pleasing, vehicle window assembly having a transparent substrate with a flexible seal secured to a major surface of the substrate. Preferably, the flexible seal is secured by molding it to the major inner surface of the substrate, which comprises, for example, a sheet of glass.

The vehicle window provides additional airflow through the vehicle passenger compartment when it is in the open position. The seal component of the subject window assembly and the means by which such seal prevents entry of dirt, water and other undesirable elements, when the vehicle window is in the closed position, is also encompassed in the present invention.

### BRIEF DESCRIPTION OF THE DRAWINGS

Fig. 1 is a plan view of the flexible frame, and the flexible seal which have been molded onto the substrate material.
Fig. 2 is a cross-sectional view of the flexible seal.
Fig. 3 is a cross-sectional view of the modular window assembly when the vehicle window is in the closed position.
Fig. 4 is a plan view of a suitable substrate material showing a possible application of an adhesion promoting primer on at least a portion of a major surface of the substrate.

### DETAILED DESCRIPTION OF THE PREFERRED EXAMPLARY EMBODIMENT

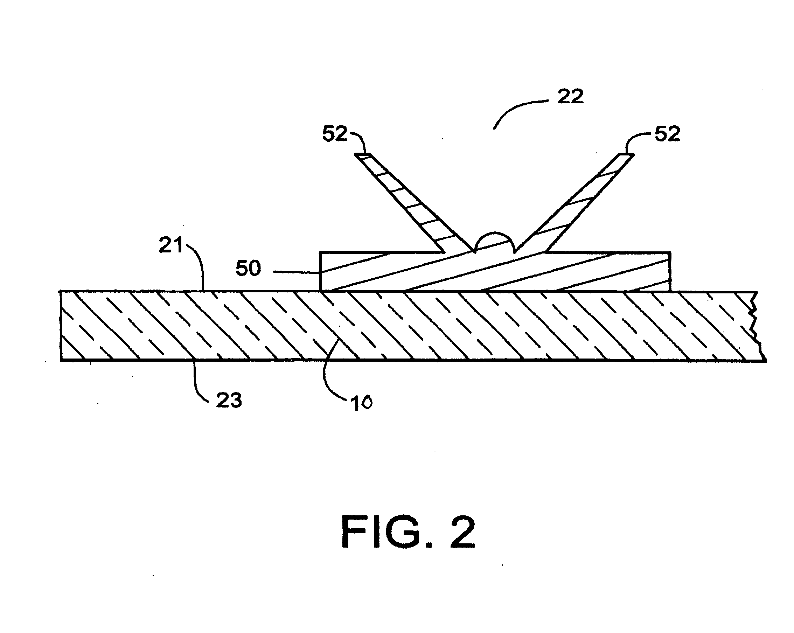

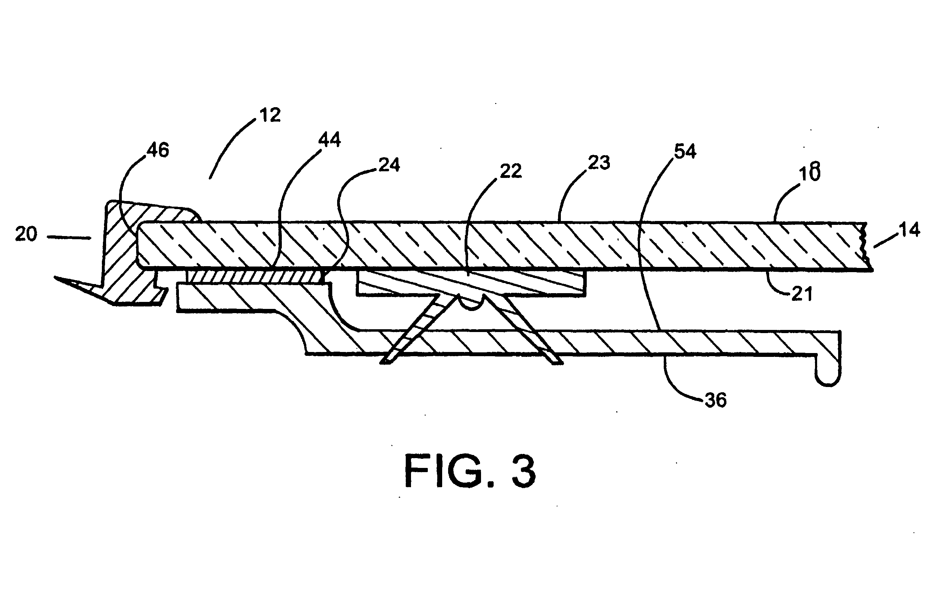

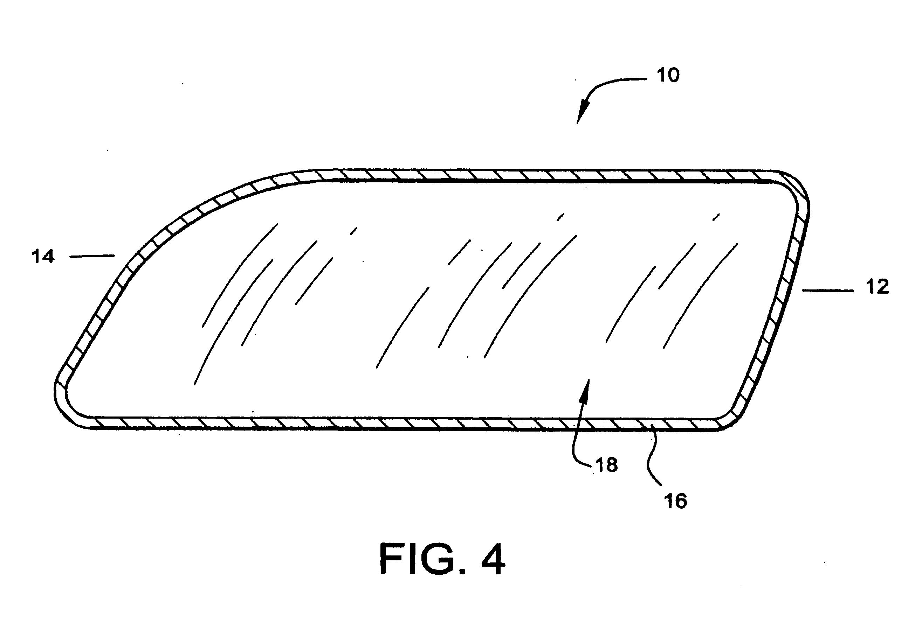

The invention is a modular window assembly having a flexible seal suitable for closing an opening in a vehicle body. Referring to Fig. 4, a suitable substrate material 10 having leading and trailing portions 12, 14 is shown. The substrate material may be any suitable automotive glass. Preferably, the glass is a privacy glass having a visible light transmittance less than 70%. The substrate material may also be a suitable plastic material, such as a polycarbonate. Any suitable substrate material will have major inner 21 and outer 23 surfaces with a peripheral edge 46 between the major surfaces (Fig. 2 and 3). An adhesion promoting primer 16 preferably is disposed on a peripheral portion of at least one major surface 18 of the substrate 10, and as necessary, on some or all of the edge portion (not shown) of the substrate 10. The adhesion promoting primer may be any suitable primer, but is preferably a silane material.

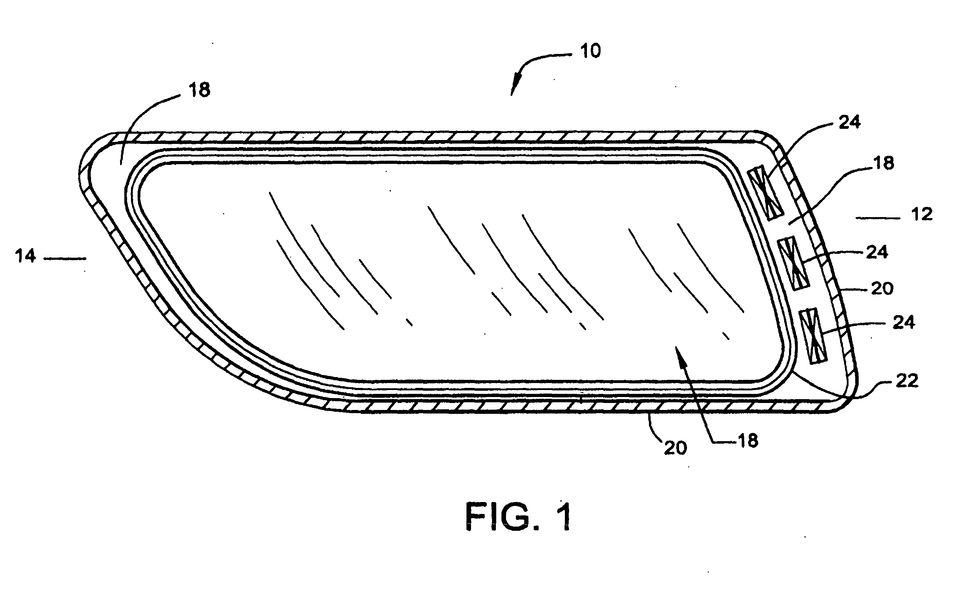

Referring now to Fig. 1, a flexible molded-on frame 20 and flexible molded-on seal 22 are adhered via a molding process to the glass substrate material. The flexible seal 22 and flexible frame 20 are adhered to at least one major surface 18 of the substrate 10 and the flexible frame may also be adhered to an edge or peripheral portion 46 as shown in Fig. 3. The portions of the substrate 10 to which the flexible frame 20 and seal 22 are adhered have preferably previously been treated with an adhesion-promoting primer. The flexible frame and seal components may be of any suitable thermoplastic elastomer material (TPE). Preferably, the flexible frame and seal components are of a polyurethane or polyester material.

Still with reference to Fig. 1, a flexible multi-component adhesive 44 (see Fig. 3) is applied to designated areas 24 on the leading portion 12 of substrate 10. The designated areas 24 may be co-planar with the major surface 18 of the substrate 10, or may be slightly raised to better bondingly contact the bonding areas 34 in a rigid non-metallic frame 36 (Fig. 3). The adhesive material bonding the substrate/frame/seal components to the preformed rigid frame must be flexible so as to function as a hinge component. The adhesive may be any suitable adhesive system, for example, a multi-component adhesive system. Preferably, the multi-component adhesive system is a two-component urethane adhesive system.

As shown in Fig. 2 a specialized seal 22 having a base portion 50 and two arm-like projections 52 are a feature of an especially preferred embodiment of the present invention. The seal structure 22 of Fig. 2 may be referred to as a "double-whisker" seal. The arm-like projections 52 are, typically, at an angle greater than 90°, but less than 120° in relation to each other. The base portion 50 of seal structure 22 and the arm-like projections of the seal structure 22 may be of the same or different materials.

As shown in Fig. 3, as a feature of the present invention seal structure 22 is molded onto glass substrate 10 during the same molding operation, during which flexible frame 20 is molded onto glass substrate 10. Such a single molding operation, involving simultaneously molding on two substantially different structures spaced apart on a substrate was one of the problems overcome by the inventors. There are substantial benefits which have been shown to accrue from this solution.

The assembly molded on frame 20 and seal 22 and flexible adhesive 44 bonding these components to the rigid non-metallic frame 36 is shown in cross-section in Fig. 3. In this configuration, trailing portion 14 of substrate 10 is capable of pivotable movement in relation to leading portion 12, the flexible adhesive 44 acting as a hinge. Such pivotable movement is typically on the order of 5°-15° between the trailing portion 14 of substrate 10 and rigid non-metallic frame 36.

When the substrate 10 is in its closest proximity to rigid non-metallic frame 36, i.e. the window is closed, seal 22, which is molded on to substrate 10, acts to prevent moisture or dirt from entering the passenger compartment of the vehicle. It does so by arm-like projections 52 both being in sealing contact with outer surface 54 of rigid non-metallic frame 36.

The above-described assembly is particularly suitable for use as what is known as a swing-out rear quarter window for vans, mini-vans, and sport utility vehicles, although it may also be used in a vehicle lift gate, as well.

The assembly may be installed in the opening of a vehicle body by use, on rigid frame 36, of any suitable adhesive, or by any suitable mechanical fastener, or by a combination of adhesives and mechanical fasteners. Preferably, the assembly is adhesively bonded to the vehicle body by a single-component urethane adhesive.

Among the benefits of the present invention is that the molded-on flexible frame 20 and seal 22 form a watertight seal in relation to the substrate 10 and since the substrate/flexible frame/seal components are directly, adhesively bonded to the preformed, rigid frame 36. The two sub-assemblies are inherently precisely positioned relative to one another, so that a tight interference match is achieved, thus ensuring a water-tight seal. The so-called "double-whisker" configuration of the molded-on seal 22 is particularly capable of providing the desired watertight seal in the configuration of the present invention, as described herein.

A further benefit of the present invention is that the molded-on seal 22 eliminates the secondary assembly operation of attaching a separate seal to the window of the vehicle body.

The molded-on frame and seal structure of the subject invention are typically made by a process as generally described below. The mold consists of an upper or core portion and a lower or cavity portion.

After placement of a substrate into the upper or lower mold portion the mold portions are brought into intimate contact, lock pins being inserted into lock pin recesses to ensure proper alignment of the mold portions. A mold cavity is formed within the secured mold halves, into which is injected a suitable polymeric material to form the flexible molded on frame and flexible seal structure.

After sufficient curing of the polymeric material, the upper and lower mold portions are moved apart, now having a flexible frame 20 and flexible seal structure 22 adhered to substrate 10 as shown in Figs. 1 and 3.

## Claims

1. A vehicle window assembly, comprising:
a movable sheet of a substrate material (10) having major inner (21) and outer (23) surfaces and a peripheral edge therebetween, **characterized in that**:
a flexible seal (22) is secured to the inner surface of the sheet (10), wherein the seal (22), for at least a portion of its length is adhered to the inner surface (21) of the substrate material (10) at a position that is spaced apart from the peripheral edge of the sheet (10), wherein the flexible seal (22) comprises a base portion (50) from which at least two arm-like projections (52) extend at a pre-determined angle relative to each other.

2. The vehicle window assembly of claim 1, wherein the arm-like projections (52) of the seal (22) are at an angle greater than 90°, but less than 120°, relative to each other.

3. The vehicle window assembly of claim 1, wherein the seal (22) has been molded onto the inner surface (21) of the substrate material (10).

4. The vehicle window assembly of claim 1, wherein the seal (22) is adhered to the inner surface (21) of the substrate material with the aid of an adhesion-promoting primer (16).

5. The vehicle window assembly of claim 2, wherein the seal (22) comprises a thermoplastic elastomer material.

6. The vehicle window assembly of claim 5, wherein the seal (22) comprises a polyurethane material.

7. The vehicle window assembly of claim 6, wherein the adhesion-promoting primer (16) comprises a silane material.

8. The vehicle window assembly of claim 2, wherein the base (50) of the seal (22) and the arm-like projections (52) of the seal (22) comprise different materials.

9. The vehicle window assembly of claim 2, wherein upon pivoting movement of the sheet (10) relative to a rigid surface the arm-like projections (52) are adapted to be brought into pressing contact with the rigid surface such that the angle between the arm-like projections (52) is increased, forming a releasable sealing bond between the arm-like projections (52) and the rigid surface.

## Patentansprüche

1. Fahrzeugfensteranordnung, welche aufweist:
eine bewegbare Scheibe aus einem Substratmaterial (10) mit einer inneren (21) und einer äußeren (23) Hauptfläche und einer Umfangskante hierzwischen, **dadurch gekennzeichnet, dass**:
eine flexible Dichtung (22) ist an der hinteren Oberfläche der Scheibe (10) befestigt, wobei die Dichtung (22) über zumindest einen Teil ihrer Länge an der inneren Oberfläche (21) des Substratmaterials (10) an einer Position haftet, die einen Abstand von der Umfangskante der Scheibe (10) aufweist, wobei die flexible Dichtung (22) einen Basisbereich (50) aufweist, von dem sich zumindest zwei armartige Vorsprünge (52) unter einem vorbestimmten Winkel relativ zueinander erstrecken.

2. Fahrzeugfensteranordnung nach Anspruch 1, bei der die armartigen Vorsprünge (52) der Dichtung (22) unter einem Winkel, der größer als 90°, aber weniger als 120° ist, relativ zu einander sind.

3. Fahrzeugfensteranordnung nach Anspruch 1, bei der die Dichtung (22) auf die innere Oberfläche (21) des Substratmaterials (10) geformt wurde.

4. Fahrzeugfensteranordnung nach Anspruch 1, bei der die Dichtung (22) mit der Hilfe eines haftungsfördernden Primers (16) an der inneren Oberfläche (21) des Substrats haftet.

5. Fahrzeugfensteranordnung nach Anspruch 2, bei der die Dichtung (22) ein thermoplastisches Elastomermaterial aufweist.

6. Fahrzeugfensteranordnung nach Anspruch 5, bei der die Dichtung (22) ein Polyurethanmaterial aufweist.

7. Fahrzeugfensteranordnung nach Anspruch 6, bei der der haftungsfördernde Primer (16) ein Silanmaterial aufweist.

8. Fahrzeugfensteranordnung nach Anspruch 2, bei der die Basis (50) der Dichtung (22) und die armartigen Vorsprünge (52) der Dichtung (22) unterschiedliche Materialien aufweisen.

9. Fahrzeugfensteranordnung nach Anspruch 2, bei der die armartigen Vorsprünge (52) so ausgebildet sind, dass sie bei einer Schwenkbewegung der Scheibe (10) relativ zu einer starren Oberfläche in Druckkontakt mit der starren Oberfläche derart gebracht werden, dass der Winkel zwischen den armartigen Vorsprüngen (52) vergrößert wird, wobei eine lösbare Dichtverbindung zwischen den armartigen Vorsprüngen (52) und der starren Oberfläche gebildet wird.

## Revendications

1. Assemblage de fenêtre pour véhicule, comprenant :
une plaque mobile d'un matériau substrat (10) ayant des surfaces principales interne (21) et externe (23) et un bord périphérique entre celles-ci, **caractérisé en ce que** :
un joint flexible (22) est fixé à la surface interne de la plaque (10), dans laquelle le joint (22), pour au moins une partie de sa longueur, adhère à la surface interne (21) du matériau substrat (10) en un endroit qui est éloigné du bord périphérique de la plaque (10), le joint flexible (22) comprenant une partie de base (50) à partir de laquelle au moins deux saillies (52) semblables à des bras s'étendent relativement l'une par rapport à l'autre, à un angle prédéterminé.

2. Assemblage de fenêtre pour véhicule selon la revendication 1, **caractérisé en ce que** les saillies (52) semblables à des bras du joint (22) font un angle supérieur à 90°, mais inférieur à 120°, relativement l'une par rapport à l'autre.

3. Assemblage de fenêtre pour véhicule selon la revendication 1, **caractérisé en ce que** le joint (22) a été moulé sur la surface interne (21) du matériau substrat (10).

4. Assemblage de fenêtre pour véhicule selon la revendication 1, **caractérisé en ce que** le joint (22) adhère à la surface interne (21) du matériau substrat à l'aide d'un primaire promoteur d'adhésion (16).

5. Assemblage de fenêtre pour véhicule selon la revendication 2, **caractérisé en ce que** le joint (22) comprend un matériau élastomère thermoplastique.

6. Assemblage de fenêtre pour véhicule selon la revendication 5, **caractérisé en ce que** le joint (22) comprend un matériau polyuréthane.

7. Assemblage de fenêtre pour véhicule selon la revendication 6, dans lequel le primaire promoteur d'adhésion comprend un silane.

8. Assemblage de fenêtre pour véhicule selon la revendication 2, **caractérisé en ce que** la partie de base (50) du joint (22) et les saillies (52) semblables à des bras du joint (22) comprennent différents matériaux.

9. Assemblage de fenêtre pour véhicule selon la revendication 2, **caractérisé en ce que** lors d'un mouvement pivotant de la plaque (10) par rapport à une surface rigide, les saillies (52) semblables à des bras sont adaptées pour être amenées en contact de pression avec la surface rigide de sorte que l'angle entre les saillies (52) semblables à des bras s'accroît, formant une liaison étanche amovible entre les saillies (52) semblables à des bras et la surface rigide.
